(19)

Europäisches
Patentamt

European
Patent Office

Office européen
des brevets

(11)  **EP 4 613 508 A2**

(12)  **EUROPEAN PATENT APPLICATION**

(43) Date of publication:
**10.09.2025  Bulletin 2025/37**

(21) Application number: **25157280.6**

(22) Date of filing: **12.02.2025**

(51) International Patent Classification (IPC):
**B60C 9/00** *(2006.01)*   **B60C 9/20** *(2006.01)*
**B60C 9/18** *(2006.01)*

(52) Cooperative Patent Classification (CPC):
**B60C 9/0007; B60C 9/20;** B60C 2009/0085;
B60C 2009/1828; B60C 2009/2061;
B60C 2009/2074

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.03.2024  JP 2024033220**
**20.06.2024  JP 2024099900**

(71) Applicant: **Sumitomo Rubber Industries, Ltd.**
**Kobe-shi, Hyogo-ken 651-0072 (JP)**

(72) Inventors:
• **NAMERA, Takayuki**
  **Kobe-shi, 651-0072 (JP)**
• **SAWAKAMI, Isao**
  **Kobe-shi, 651-0072 (JP)**
• **IMAI, Daiki**
  **Kobe-shi, 651-0072 (JP)**
• **MISAKI, Momoka**
  **Kobe-shi, 651-0072 (JP)**

(74) Representative: **Manitz Finsterwald**
**Patent- und Rechtsanwaltspartnerschaft mbB**
**Martin-Greif-Straße 1**
**80336 München (DE)**

(54)  **PNEUMATIC TIRE**

(57)      Provided is a pneumatic tire having improved noise performance by reducing pass-by noise. A pneumatic tire 1 includes a belt layer 7. The belt layer 7 is composed of two belt plies 7A, 7B. Each of the belt plies 7A, 7B includes a plurality of steel cords 12 and a topping rubber 13, and has a thickness TP of 0.65 to 0.85 (mm). Each steel cord 12 has a strength of 400 to 540 (N). The number of the steel cords 12 per width of 5 (cm) in a direction orthogonal to a longitudinal direction of the steel cords 12 is 40 to 50. The steel cord 12 has an outer diameter of 0.36 to 0.42 (mm).

$$0.09 \leq (TP \times 2)/((TA+TH)/2) \leq 0.14 \ldots (1)$$

TA: tread portion thickness (mm) at the position of a tire equator C
TH: tread portion thickness (mm) at the position of each of ground-contact ends Te

Fig. 2

EP 4 613 508 A2

**Description**

BACKGROUND OF THE INVENTION

Field of the Invention

The present invention relates to a pneumatic tire.

Background Art

Japanese Laid-Open Patent Publication No. 2019-177838 discloses a tire including a belt and a band. The belt is formed of two or more stacked layers. Each layer includes a rubber composition and cords. In addition, Japanese Laid-Open Patent Publication No. 2019-177838 suggests a tire in which a gauge between the cords of the two adjacent layers is specified to allow achievement of both excellent road-noise reduction effect and excellent low fuel consumption performance.

In recent years, with the spread of electric vehicles and the like, there has been a need to improve noise performance. In order to achieve reduction in pass-by noise which is one of such noise performance, for example, a method for forming a band that is composed of a full band and a pair of edge bands each having a short length in a tire axial direction and respectively covering outer ends in the tire axial direction of the full band, on the outer side in a tire radial direction with respect to the belt layer formed of steel cords and disposed in a tread portion, is conceivable.

However, the above-described method has limitations in reducing pass-by noise.

The present invention has been made in view of the above circumstances, and a main object of the present invention is to provide a pneumatic tire having improved noise performance by reducing pass-by noise.

SUMMARY OF THE INVENTION

The present invention is directed to a pneumatic tire including: a tread portion having a pair of ground-contact ends; a pair of bead portions; a toroidal carcass disposed so as to extend through the tread portion and extend over and between the pair of bead portions; and a belt layer disposed outward of the carcass in a tire radial direction, wherein the belt layer is composed of two belt plies stacked in the tire radial direction, each of the two belt plies includes a plurality of steel cords and a topping rubber covering the plurality of steel cords, each of the belt plies has a thickness TP of 0.65 to 0.85 (mm), each steel cord has a strength of 400 to 540 (N), a number of the steel cords per width of 5 (cm) in a direction orthogonal to a longitudinal direction of the steel cords is 40 to 50, the steel cord has an outer diameter of 0.36 to 0.42 (mm), and where a tread portion thickness at a position of a tire equator is represented by TA (mm) and a tread portion thickness at a position of each ground-contact end is represented by TH (mm), the following formula (1) is satisfied,

$$0.09 \leq (TP \times 2)/((TA+TH)/2) \leq 0.14 \ldots (1).$$

As a result of adopting the above-described configuration, the pneumatic tire of the present invention can improve noise performance by reducing pass-by noise.

BRIEF DESCRIPTION OF THE DRAWINGS

FIG. 1 is a tire meridional cross-sectional view of a tire according to one embodiment of the present invention;
FIG. 2 is a partially enlarged view of FIG. 1; and
FIG. 3 is a cross-sectional view of a steel cord according to another embodiment.

DETAILED DESCRIPTION

Hereinafter, embodiments of the present invention will be described with reference to the drawings. The drawings are depicted so as to include the features of the present invention, but may contain exaggerated expressions and expressions that differ from the dimensional ratio of the actual structure in order to help the understanding of the present invention. In addition, the same or common elements are denoted by the same reference characters throughout each embodiment, and the redundant description thereof is omitted. In addition, a known configuration can be used as appropriate for a configuration that is not described in the present description.

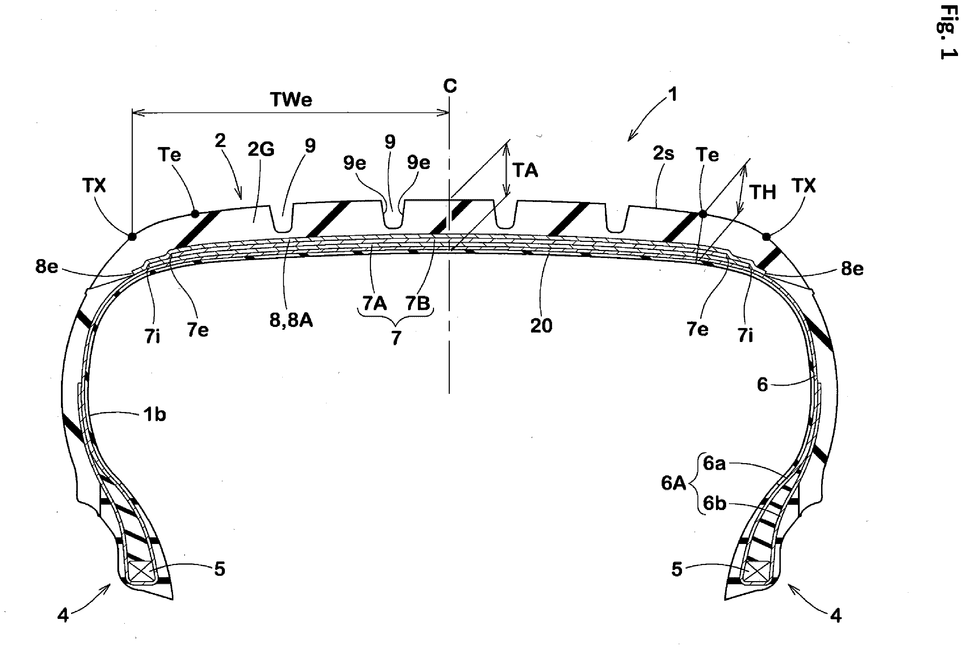

FIG. 1 is a tire meridional cross-sectional view, of a pneumatic tire 1 (hereinafter, sometimes referred to simply as "tire 1") according to one embodiment of the present invention, including a tire rotation axis (not shown). FIG. 1 shows the tire 1 in a standardized state. The tire 1 of the present embodiment is suitably used as, for example, a pneumatic tire for a passenger car. However, the present invention is not limited to such a mode, and may be applied to, for example, a heavy-duty pneumatic tire.

In the case of a pneumatic tire for which various standards are defined, the "standardized state" is a state where the tire is fitted on a standardized rim and inflated to a standardized internal pressure and no load is applied to the tire. In the case of a tire for which various standards are not defined, the standardized state means a standard use state, corresponding to the purpose of use of the tire, where the tire is not mounted on a vehicle and no load is applied to the tire. In the present specification, unless otherwise specified, dimensions and the like of components of the tire are values measured in the standardized state. In addition, dimensions of components (e.g., an inner member of the tire 1) that cannot be measured in the standardized state are values measured in a state where the tire 1 is made to approximate the standardized state as much as possible.

The "standardized rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The tire 1 includes a tread portion 2 having a pair of ground-contact ends Te, and a pair of bead portions 4. In addition, the tire 1 includes a toroidal carcass 6 disposed so as to extend through the tread portion 2 and extend over and between the pair of bead portions 4, and a belt layer 7 disposed outward of the carcass 6 in a tire radial direction.

As shown in FIG. 1, in the present description, each ground-contact end Te is located at a distance equal to 80% of a tread half width TWe from a tire equator C. The tread half width TWe refers to a length between the tire equator C and each of tread ends TX in a tire axial direction. The tread ends TX are ground contact positions at the outermost side in the tire axial direction when a standardized load is applied to the tire 1 in the standardized state and the tire 1 is in contact with a flat surface at a camber angle of 0 degrees. The tire equator C is located at the center between the tread ends TX on both ends in the tire axial direction. The "standardized load" is a load that is defined, in a standard system including a standard on which the tire is based, by the standard for each tire. The standardized load is, for example, the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

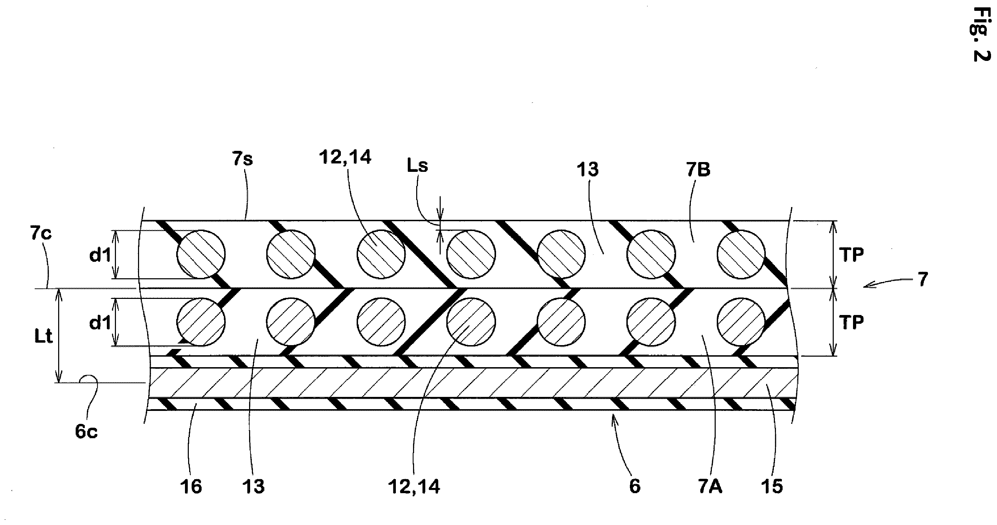

FIG. 2 is a partially enlarged view of the tread portion 2 in FIG. 1. As shown in FIG. 1 and FIG. 2, the belt layer 7 is composed of two belt plies 7A, 7B stacked in the tire radial direction. Each of the two belt plies 7A, 7B includes a plurality of steel cords 12 and a topping rubber 13 covering the plurality of steel cords 12.

Each of the belt plies 7A, 7B has a thickness TP of 0.65 to 0.85 (mm). In addition, each steel cord 12 has an outer diameter d1 of 0.36 to 0.42 (mm). Each steel cord 12 may have an outer diameter d1 of 0.36 to 0.55 (mm). With such belt plies 7A, 7B, the tread portion 2 has a reduced mass, and thus centrifugal force acting on the tread portion 2 during running decreases, so that the difference between a dynamic loaded radius and a static loaded radius (hereinafter, referred to as "radius difference") of the tire 1 decreases. Thus, difference in the shape of the tread portion 2 between the tire 1 in contact with the ground and the tire 1 not in contact with the ground decreases, and the amplitude of the vibration of the tread portion 2 also decreases. Accordingly, the ambient air vibration due to the tread portion 2 is inhibited, and pass-by noise is reduced. As the thickness TP, a thickness at the tire equator C is used. In the present embodiment, the thickness TP of the belt ply 7A is equal to the thickness TP of the belt ply 7B.

Further, each steel cord 12 has a strength of 400 to 540 (N). In addition, the number of the steel cords 12 (hereinafter, referred to as "ends") per width of 5 (cm) of each of the belt plies 7A, 7B in a direction orthogonal to a longitudinal direction of the steel cords 12, is 40 to 50. The belt plies 7A, 7B including such steel cords 12 can maintain the rigidity of the tread portion 2, and further decrease the above-described radius difference due to centrifugal force acting during running. The strength is measured by a known method, and a measurement method conforming to JIS G3510 may be used as necessary.

Further, where a tread portion thickness at the position of the tire equator C is represented by TA (mm), and a tread portion thickness at the position of each ground-contact end Te is represented by TH (mm), the following formula (1) is satisfied.

$$0.09 \leq (TP \times 2)/((TA+TH)/2) \leq 0.14 \ldots (1)$$

(TA+TH)/2 can represent the average thickness between a ground-contact surface 2s and a tire inner cavity surface 1b of the tread portion 2. Since the thickness of each of the belt plies 7A, 7B relative to the thickness of the tread portion 2 is prescribed as in the above, increase in the mass of the tread portion 2 can be inhibited and rigidity can be maintained. Thus, the tire 1 of the present invention can exert excellent noise performance. In particular, when $0.09 \leq (TP \times 2)/((TA+TH)/2)$ is satisfied, excessive increase in the rubber thickness of a tread rubber 2G described below is inhibited, and the mass of the tread portion 2 is ensured, so that low fuel consumption performance is maintained. In addition, the thickness TP of each of the belt plies 7A, 7B is ensured, so that durability is also maintained. Further, when $(TP \times 2)/((TA+TH)/2) \leq 0.14$ is satisfied, the rubber thickness of the tread rubber 2G is ensured, and the groove depth of a circumferential groove 9 described below is maintained to be great, so that each running performance is maintained at a high level. An effect of formula (1) will be specifically described in comparative examples and examples described below. In addition, each of the tread portion thicknesses TA, TH is specified by a length in the direction normal to the ground-contact surface 2s. Further, if the thicknesses at the ground-contact ends Te on both sides are different, a greater thickness is used as the tread portion thickness TH. Further, when the thickness TP of the belt ply 7A and the thickness TP of the belt ply 7B are different from each other, a greater thickness is used.

The belt plies 7A, 7B are respectively an inner belt ply 7A, and an outer belt ply 7B disposed outward of the inner belt ply 7A in the tire radial direction, for example. In the present embodiment, the length in the tire axial direction of the outer belt ply 7B is less than the length in the tire axial direction of the inner belt ply 7A. Outer ends 7e in the tire axial direction of the outer belt ply 7B are respectively located outward of the ground-contact ends Te in the tire axial direction. In other words, the tread portion thickness TH at the position of each ground-contact end Te includes the thicknesses of the two belt plies 7A, 7B.

The steel cords 12 are arranged at an angle of 15 to 45° (not shown) relative to a tire circumferential direction. In addition, the steel cords 12 included in the inner belt ply 7A and the steel cords 12 included in the outer belt ply 7B are inclined relative to the tire circumferential direction in directions opposite to each other. Thus, the rigidity of the tread portion 2 is effectively reinforced.

In each of the belt plies 7A, 7B, a separation distance Ls from a surface 7s of the belt ply (a surface of the outer belt ply 7B is shown in FIG. 2) to each steel cord 12 is preferably not greater than 0.2 mm. In such a mode, the belt layer 7 has a reduced mass, and centrifugal force acting on the tread portion 2 during running may decrease. In order to inhibit the steel cord 12 from coming into contact with a cord in another tire constituent member (e.g., a carcass cord or a band cord described below), the separation distance Ls is preferably not less than 0.1 mm.

From the viewpoint of reducing the mass of the tire 1 and ensuring the basic rigidity of the tread portion 2, the mass per unit area of each of the belt plies 7A, 7B is preferably 1350 to 1980 $g/m^2$. In addition, the mass of the topping rubber 13 included per unit area of each of the belt plies 7A, 7B is preferably 600 to 1300 $g/m^2$.

As a material for the steel cord 12, for example, one of a so-called UT material (ultra-tensile material) which can be expected to exhibit a tensile strength of 4000 MPa or more and a so-called MT material (mega-tensile material) which can be expected to exhibit a tensile strength of 4500 MPa or more is used. The steel cord 12 preferably has a carbon content of 0.84% to 1.00%. However, the steel cord 12 of the present invention is not limited to such a mode. A known measurement method is used in measurement of the tensile strength described above.

The steel cord 12 of the present embodiment has, for example, a $1 \times 1$ structure composed of a monofilament 14. The steel cord 12 is not limited to such a mode.

In the present embodiment, the carcass 6 is composed of one carcass ply 6A. The carcass ply 6A includes, for example, a body portion 6a and turned-up portions 6b. The body portion 6a, for example, extends between bead cores 5, 5 embedded in the bead portions 4 on both sides. The turned-up portions 6b are connected to the body portion 6a and are turned up around the bead cores 5 from an inner side toward an outer side in the tire axial direction, for example. The carcass 6 may be composed of, for example, two carcass plies stacked in the tire radial direction (not shown).

As shown in FIG. 2, the carcass ply 6A includes a plurality of carcass cords 15 (one carcass cord 15 is shown in FIG. 2), and a topping rubber 16 covering the plurality of carcass cords 15. For example, organic fiber cords such as aramid cords or rayon cords are used as the carcass cords 15. The carcass cords 15 are preferably arranged at an angle of 70 to 90° (not shown) relative to the tire equator C, for example. That is, the tire 1 of the present embodiment is formed so as to have a radial structure.

A distance Lt from a thickness center position 6c of the carcass 6 to a thickness center position 7c of the belt layer 7 is preferably not less than 1.1 mm and more preferably not less than 1.5 mm, and is preferably not greater than 2.4 mm and more preferably not greater than 2.0 mm. Since the distance Lt is not less than 1.1 mm, the basic rigidity of the tread portion 2 is ensured, and the basic rigidity of the tread portion 2 is maintained at a high level, so that the above-described radius difference due to centrifugal force acting during running may decrease. Since the distance Lt is not greater than 2.4 mm, increase in the mass of the tread portion 2 is inhibited, and thus pass-by noise can be reduced.

As shown in FIG. 1, the tread portion 2 includes a band layer 8 having a greater width than the belt layer 7 in the tire axial direction and disposed outward of the belt layer 7 in the tire radial direction, and an inner liner 20 disposed inward of the carcass 6 in the tire radial direction. In addition, the tread portion 2 includes the tread rubber 2G disposed outward of the band layer 8 in the tire radial direction, and at least one circumferential groove 9 continuously extending in the tire circumferential direction.

The inner liner 20 is, for example, disposed so as to extend through the tread portion 2 and extend over and between the pair of bead portions 4, 4. The inner liner 20 of the present embodiment defines the tire inner cavity surface 1b. The inner liner 20 is formed of, for example, air-impermeable butyl-based rubber. A tie gum layer (not shown) having a high adhesiveness may be disposed between the inner liner 20 and the carcass 6.

In the present embodiment, the band layer 8 has outer ends 8e outward of both outer ends 7i in the tire axial direction of the inner belt ply 7A, in the tire axial direction, respectively. Thus, the band layer 8 of the present embodiment is formed as a so-called full band. Such a band layer 8 reinforces the tread portion 2 and enhances the rigidity of the tread portion 2. The band layer 8 may be formed by, for example, the full band and a pair of edge bands (not shown).

The band layer 8 of the present embodiment is composed of one band ply 8A. The band ply 8A includes, for example, a band cord arranged at an angle not greater than 5° relative to the tire circumferential direction, and a topping rubber (not shown) covering the band cord.

The tread rubber 2G extends beyond the ground-contact ends Te on both sides toward both sides in the tire axial direction. Thus, in the present embodiment, each of the tread portion thicknesses TA, TH refers to a thickness including at least thicknesses of the tread rubber 2G, the band layer 8, the belt plies 7A, 7B, the carcass 6, and the inner liner 20. The tread rubber 2G is formed of a known rubber material.

The following formula (2) is preferably satisfied with respect to the tread portion thickness TA and the tread portion thickness TH.

$$0.5 \text{ mm} \leq TA - TH \leq 5 \text{ mm} \ldots (2)$$

Since the tread portion thickness TA is greater than the tread portion thickness TH and the difference therebetween is not less than 0.5 mm, the ground-contact shape (not shown) of the tread portion 2 is rounded during running, and ground-contact pressure on each ground-contact end Te side relatively decreases in moderation, so that excitation of air vibration can be inhibited. Accordingly, noise performance can be improved. In addition, since the tread portion thickness TA is greater than the tread portion thickness TH and the difference therebetween is not greater than 5 mm, excessive reduction in ground-contact pressure on each ground-contact end Te side is inhibited, so that basic steering stability can be maintained at a high level.

In order to effectively exert the above-described effect, the following formula (3) is preferably satisfied.

$$2 \text{ mm} \leq TA - TH \leq 4 \text{ mm} \ldots (3)$$

In the present embodiment, the circumferential groove 9 is disposed so as not to be placed on the tire equator C. The circumferential groove 9 of the present embodiment has groove walls 9e formed in a V shape and extending so as to be inclined relative to a normal line that is normal to the ground-contact surface 2s. The groove walls 9e of the circumferential groove 9 may extend in parallel with the normal line that is normal to the ground-contact surface 2s. In addition, a groove such as the circumferential groove 9 refers to a groove-shaped portion having a groove width of 1.5 mm or greater, and is clearly distinguished from a sipe formed as a cut portion having a width less than 1.5 mm.

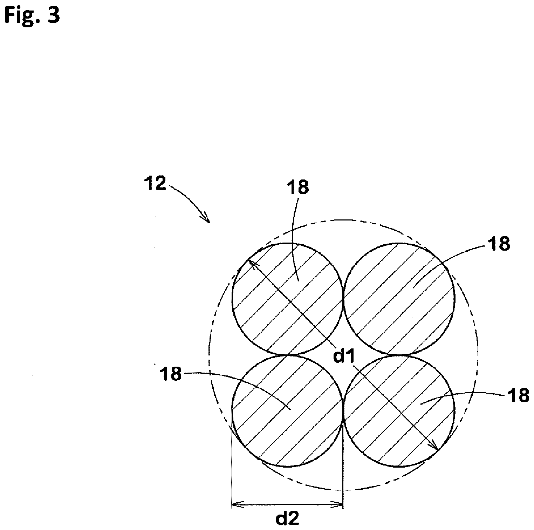

FIG. 3 is a cross-sectional view of a steel cord 12 of another embodiment. As shown in FIG. 3, the steel cord 12 of this embodiment has a 1×n structure composed of a plurality (n) of filaments 18. The steel cord 12 having a 1×4 structure is shown in FIG. 3. Each of the plurality of filaments 18 has an outer diameter d2 of 0.15 to 0.22 mm, for example. Also, with such a steel cord 12, noise performance can be improved. In this case, the outer diameter d1 of the steel cord 12 is as shown in FIG. 3.

The tire according to the embodiments of the present invention has been described above in detail. However, the present invention is not limited to the above-described specific embodiments, and various modifications can be made to implement the present invention.

EXAMPLES

Pneumatic tires with a size of 205/55R16 having the basic structure shown in FIG. 1 were produced as test tires on the basis of specifications in Table 1. Then, each test tire was tested for noise performance. The test method and common specifications for the test tires are as follows.

Mount rim: 16×6.5
Tire internal pressure: 250 kPa
Strength of steel cord: 440 N
Ends: 46
Outer diameter d1: 0.46 mm
Drawing showing steel cord: FIG. 2, FIG. 3

<Noise performance>

The test tires were mounted to all the wheels of the following test vehicle. Then, sensory evaluation was made by the tester in terms of pass-by noise when the test vehicle was allowed to coast under the following conditions. The results are indicated with 6 being the best score. The greater the value is, the better the noise performance is. In addition, in the case where values are equal to each other, the value with "-" is worse than that without "-" and the value with "+" is better than that without "+". In the result, 5.5 or greater is preferable. In addition, the mass of the tire is preferably 8.4 kg or less.

Test vehicle: an FF vehicle having an engine displacement of 2000 cc
Speed: 60 km/h

The test results are indicated in Table 1.

[Table 1]

| | Comp. Ex. 1 | Comp. Ex. 2 | Comp. Ex. 3 | Comp. Ex. 4 | Ex. 1 | Ex. 2 | Ex. 3 | Ex. 4 | Ex. 5 | Ex. 6 | Comp. Ex. 5 | Comp. Ex. 6 |
|---|---|---|---|---|---|---|---|---|---|---|---|---|
| Drawing showing steel cord | FIG. 2 | FIG. 2 | FIG. 2 | FIG. 2 | FIG. 2 | FIG. 2 | FIG. 2 | FIG. 2 | FIG. 3 | FIG. 3 | FIG. 2 | FIG. 2 |
| TA (mm) | 11.6 | 13.6 | 11.6 | 13.6 | 11.6 | 13.6 | 15.4 | 11.4 | 13.6 | 15.4 | 16.0 | 11.4 |
| TH (mm) | 10.6 | 10.6 | 10.6 | 10.6 | 10.6 | 10.6 | 16.3 | 10.0 | 10.6 | 16.3 | 17.8 | 10.0 |
| TA+TH (mm) | 22.2 | 24.2 | 22.2 | 24.2 | 22.2 | 24.2 | 31.7 | 21.4 | 24.2 | 31.7 | 33.8 | 22.2 |
| TP (mm) | 1.2 | 1.2 | 0.95 | 0.95 | 0.73 | 0.73 | 0.73 | 0.73 | 0.82 | 0.82 | 0.65 | 0.85 |
| Formula (1) | 0.22 | 0.20 | 0.17 | 0.16 | 0.13 | 0.12 | 0.09 | 0.14 | 0.14 | 0.10 | 0.08 | 0.15 |
| Mass (kg) of tire | 8.1 | 8.2 | 7.9 | 8 | 7.7 | 7.8 | 8.2 | 7.6 | 7.8 | 8.2 | 8.5 | 8.1 |
| Noise performance [best score set at 6, higher value is better] | 5- | 5 | 5+ | 5.5- | 5.5+ | 6- | 5.5 | 6 | 5.5+ | 5.5 | 5.5- | 5.5- |

As shown in Table 1, it has been understood that the tire of each example has excellent noise performance as compared to the tires of the comparative examples.

[Additional Note]

The present invention includes the following aspects.

[Present Invention 1]

A pneumatic tire including:

a tread portion having a pair of ground-contact ends;
a pair of bead portions;
a toroidal carcass disposed so as to extend through the tread portion and extend over and between the pair of bead portions; and
a belt layer disposed outward of the carcass in a tire radial direction, wherein
the belt layer is composed of two belt plies stacked in the tire radial direction,
each of the two belt plies includes a plurality of steel cords and a topping rubber covering the plurality of steel cords,
each of the belt plies has a thickness TP of 0.65 to 0.85 (mm),
each steel cord has a strength of 400 to 540 (N),
a number of the steel cords per width of 5 (cm) in a direction orthogonal to a longitudinal direction of the steel cords is 40 to 50,
the steel cord has an outer diameter of 0.36 to 0.42 (mm), and
where a tread portion thickness at a position of a tire equator is represented by TA (mm) and a tread portion thickness at a position of each ground-contact end is represented by TH (mm), the following formula (1) is satisfied,

$$0.09 \leq (TP \times 2)/((TA+TH)/2) \leq 0.14 \ldots (1).$$

[Present Invention 2]

The pneumatic tire according to Present Invention 1, wherein

the carcass is composed of one or two carcass plies each including a plurality of carcass cords, and a topping rubber covering the plurality of carcass cords, and
a distance from a thickness center position of the carcass to a thickness center position of the belt layer is 1.1 to 2.4 (mm).

[Present Invention 3]

The pneumatic tire according to Present Invention 1 or 2, wherein the steel cord has a carbon content of 0.84% to 1.00%.

[Present Invention 4]

The pneumatic tire according to any one of Present Inventions 1 to 3, wherein the steel cord has a 1×1 structure composed of a monofilament.

[Present Invention 5]

The pneumatic tire according to any one of Present Inventions 1 to 3, wherein

the steel cord has a 1×n structure composed of a plurality (n) of filaments, and
each of the plurality of filaments has an outer diameter of 0.15 to 0.22 mm.

[Present Invention 6]

The pneumatic tire according to any one of Present Inventions 1 to 5, wherein, in each of the belt plies, a separation distance from a surface of the belt ply to each steel cord is not greater than 0.2 mm.

[Present Invention 7]

The pneumatic tire according to any one of Present Inventions 1 to 6, wherein the following formula (2) is satisfied,

$$0.5 \text{ mm} \leq TA-TH \leq 5 \text{ mm} \ldots (2).$$

[Present Invention 8]

The pneumatic tire according to Present Invention 7, wherein the following formula (3) is satisfied,

$$2 \text{ mm} \leq TA-TH \leq 4 \text{ mm} \ldots (3).$$

[Present Invention 9]

The pneumatic tire according to any one of Present Inventions 1 to 8, wherein the tread portion includes a band layer having a greater width than the belt layer in the tire axial direction and disposed outward of the belt layer in the tire radial direction.

[Present Invention 10]

A pneumatic tire including:

a tread portion having a pair of ground-contact ends;
a pair of bead portions;
a toroidal carcass disposed so as to extend through the tread portion and extend over and between the pair of bead portions; and
a belt layer disposed outward of the carcass in a tire radial direction, wherein
the belt layer is composed of two belt plies stacked in the tire radial direction,
each of the two belt plies includes a plurality of steel cords and a topping rubber covering the plurality of steel cords,
each of the belt plies has a thickness TP of 0.65 to 0.85 (mm),
each steel cord has a strength of 400 to 540 (N),
a number of the steel cords per width of 5 (cm) in a direction orthogonal to a longitudinal direction of the steel cords is 40 to 50,
the steel cord has an outer diameter of 0.36 to 0.55 (mm), and
where a tread portion thickness at a position of a tire equator is represented by TA (mm) and a tread portion thickness at a position of each ground-contact end is represented by TH (mm), the following formula (1) is satisfied,

$$0.09 \leq (TP \times 2)/((TA+TH)/2) \leq 0.14 \ldots (1).$$

**Claims**

1.  A pneumatic tire (1) comprising:

    a tread portion (2) having a pair of ground-contact ends (Te);
    a pair of bead portions (4);
    a toroidal carcass (6) disposed so as to extend through the tread portion (2) and extend over and between the pair of bead portions (4); and
    a belt layer (7) disposed outward of the carcass (6) in a tire radial direction, wherein
    the belt layer (7) is composed of two belt plies (7A, 7B) stacked in the tire radial direction,
    each of the two belt plies (7A, 7B) includes a plurality of steel cords (12) and a topping rubber (13) covering the plurality of steel cords (12),
    each of the belt plies (7A, 7B) has a thickness (TP) of 0.65 to 0.85 (mm),
    each steel cord (12) has a strength of 400 to 540 (N),

a number of the steel cords (12) per width of 5 (cm) in a direction orthogonal to a longitudinal direction of the steel cords (12) is 40 to 50,

the steel cord (12) has an outer diameter (d1) of 0.36 to 0.42 (mm), and

where a tread portion thickness (TA) at a position of a tire equator (C) is represented by (TA) (mm) and a tread portion thickness (TH) at a position of each ground-contact end (Te) is represented by (TH) (mm), the following formula (1) is satisfied,

$$0.09 \leq (TP \times 2)/((TA+TH)/2) \leq 0.14 \ldots (1).$$

2. The pneumatic tire (1) according to claim 1, wherein

the carcass (6) is composed of one or two carcass plies (6A) each including a plurality of carcass cords (15), and a topping rubber (16) covering the plurality of carcass cords (15), and

a distance (Lt) from a thickness center position (6c) of the carcass (6) to a thickness center position (7c) of the belt layer (7) is 1.1 to 2.4 (mm).

3. The pneumatic tire (1) according to claim 1 or 2, wherein the steel cord (12) has a carbon content of 0.84% to 1.00%.

4. The pneumatic tire (1) according to any one of claims 1 to 3, wherein the steel cord (12) has a 1×1 structure composed of a monofilament (14).

5. The pneumatic tire (1) according to any one of claims 1 to 3, wherein

the steel cord (12) has a 1×n structure composed of a plurality (n) of filaments (18), and

each of the plurality of filaments (18) has an outer diameter (d2) of 0.15 to 0.22 mm.

6. The pneumatic tire (1) according to any one of claims 1 to 5, wherein, in each of the belt plies (7A, 7B), a separation distance (Ls) from a surface (7s) of the belt ply (7A, 7B) to each steel cord (12) is not greater than 0.2 mm.

7. The pneumatic tire (1) according to any one of claims 1 to 6, wherein the following formula (2) is satisfied,

$$0.5 \text{ mm} \leq TA - TH \leq 5 \text{ mm} \ldots (2).$$

8. The pneumatic tire (1) according to claim 7, wherein the following formula (3) is satisfied,

$$2 \text{ mm} \leq TA - TH \leq 4 \text{ mm} \ldots (3).$$

9. The pneumatic tire (1) according to any one of claims 1 to 8, wherein the tread portion (2) includes a band layer (8) having a greater width than the belt layer (7) in the tire axial direction and disposed outward of the belt layer (7) in the tire radial direction.

10. A pneumatic tire (1) comprising:

a tread portion (2) having a pair of ground-contact ends (Te);

a pair of bead portions (4);

a toroidal carcass (6) disposed so as to extend through the tread portion (2) and extend over and between the pair of bead portions (4); and

a belt layer (7) disposed outward of the carcass (6) in a tire radial direction, wherein

the belt layer (7) is composed of two belt plies (7A, 7B) stacked in the tire radial direction,

each of the two belt plies (7A, 7B) includes a plurality of steel cords (12) and a topping rubber (13) covering the plurality of steel cords (12),

each of the belt plies (7A, 7B) has a thickness (TP) of 0.65 to 0.85 (mm),

each steel cord (12) has a strength of 400 to 540 (N),

a number of the steel cords (12) per width of 5 (cm) in a direction orthogonal to a longitudinal direction of the steel cords (12) is 40 to 50,

the steel cord (12) has an outer diameter (d1) of 0.36 to 0.55 (mm), and

where a tread portion thickness (TA) at a position of a tire equator (C) is represented by (TA) (mm) and a tread portion thickness (TH) at a position of each ground-contact end (Te) is represented by (TH) (mm), the following formula (1) is satisfied,

$$0.09 \leq (TP \times 2)/((TA+TH)/2) \leq 0.14 \ldots (1).$$

**Fig. 1**

Fig. 2

**Fig. 3**

**REFERENCES CITED IN THE DESCRIPTION**

**Patent documents cited in the description**

- JP 2019177838 A